# EUROPÄISCHE PATENTSCHRIFT

(11) **EP 1 032 961 B1**
(45) Veröffentlichungstag und Bekanntmachung des Hinweises auf die Patenterteilung: **03.09.2003**
(21) Anmeldenummer: 98954650.2
(22) Anmeldetag: 19.11.1998
(51) Int. Cl.: H01Q 3/26, H01Q 21/29, G01S 7/28

(54) **ANTENNENANLAGE UND VERFAHREN ZUM BETREIBEN EINER ANTENNENANLAGE**
ANTENNA SYSTEM AND METHOD FOR OPERATING AN ANTENNA SYSTEM
SYSTEME D'ANTENNES ET PROCEDE PERMETTANT DE LE FAIRE FONCTIONNER

(30) Priorität: 19.11.1997 DE 19751122
(43) Veröffentlichungstag der Anmeldung: 06.09.2000
(73) Patentinhaber: Airsys Navigation Systems GmbH, 70435 Stuttgart (DE)
(72) Erfinder: GREVING, Gerhard, F-94117 Arcueil Cedex (FR)
(74) Vertreter: Lucas, Laurent Jacques
(86) Internationale Anmeldenummer: IB9801831
(87) Internationale Veröffentlichungsnummer: WO99026313

(56) Entgegenhaltungen:
- US-A- 4 225 870
- US-A- 4 280 128
- HIRATA K ET AL: "A METHOD FOR ARRANGEMENT OF AUXILIARY ANTENNAS TO MINIMIZE THE INFLUENCE OF THE INCIDENT DIRECTIONS OF INTERFERENCES ON SUPPRESSION PERFORMANCE IN A MULTIPLE SIDELOBE CANCELLER" ELECTRONICS & COMMUNICATIONS IN JAPAN, PART I - COMMUNICATIONS, Bd. 80, Nr. 1, Januar 1997, Seiten 100-111, XP000687331
- ZOLTOWSKI M D ET AL: "ADVANCED ADAPTIVE NULL STEERING CONCEPTS FOR GPS" PROCEEDINGS OF THE MILITARY COMMUNICATIONS CONFERENCE (MILCOM), SAN DIEGO, NOV. 6 - 8, 1995, Bd. 3, 6. November 1995, Seiten 1214-1218, XP000586715 INSTITUTE OF ELECTRICAL AND ELECTRONICS ENGINEERS
- BARTON: "NAVSTAR GPS ADAPTIVE ANTENNA SYSTEMS" CONFERENCE PROCEEDINGS MILITARY MICROWAVES 86, 24. - 26. Juni 1986, Seiten 555-563, XP002094733 brighton,england

## Beschreibung

Die Erfindung betrifft eine Antennenanlage mit einer Rundempfangsantenne und mit einer (ersten) Hilfsantenne, deren Empfangssignale bezüglich Amplitude und Phase derart kombinierbar sind, daß in einer gewünschten Richtung des Raums ein Empfangsminimum besteht.

Eine derartige Anordnung mit zwei elektrisch zusammengeschalteten Antennen und einem einzigen Empfangsminimum ist aus der EP 0 124 047 A2 bekannt. Das Empfangsminimum dient dazu, die Signale eines Störers (Störsenders), der den Empfang der Antennenanlage stört, genügend stark zu dämpfen, so daß Nutzsignale aus anderen Richtungen als der des Störers empfangen werden können.

Eine derartige Antennenanlage mit einer Rundempfangsantenne und zwei Hilfsantennen, deren Empfangssignale bezüglich Amplitude und Phase derart kombinierbar sind, daß in einer gewünschten Richtung des Raums ein Empfangsminimum besteht ist aus HIRATA K ET AL: "A METHOD FOR ARRANGEMENT OF AUXILIARY ANTENNAS TO MINIMIZE THE INFLUENCE OF THE INCIDENT DIRECTIONS OF INTERFERENCES ON SUPPRESSION PERFORMANCE IN A MULTIPLE SIDELOBE CANCELLER" ELECTRONICS & COMMUNICATIONS IN JAPAN, PART I - COMMUNICATIONS, Bd. 80, Nr. 1, Januar 1997, Seiten 110-111, XP000687331 bekannt. Dort ist auch die Möglichkeit beschrieben, mittels der beiden Hilfsantennen mehrere Störer aus verschiedenen Richtungen des Raums auszublenden.

Rundempfangsantennen, insbesondere mit einem nahezu hemisphärischen Empfangsbereich, eignen sich gut für den Empfang von Signalen, die von Satelliten, insbesondere von bezüglich der Erdoberfläche umlaufenden Satelliten ausgesandt werden. Hierzu gehören z.B. Ortungs- und Navigationssatelliten, z.B. GPS-Satelliten (GPS = Global Positioning System). Man kann annehmen, daß die Störleistung des Störers größer oder sogar sehr viel größer ist als die an einer Bodenstation empfangene Leistung der einzelnen Satelliten. Bekannte moderne GPS-Empfänger tolerieren zwar Störleistungen, die bis zu einem bestimmten Maß größer sind als die GPS-Empfangsleistung. Bei zu großer Störleistung ist aber dennoch eine Reduzierung der Störleistung erforderlich.

Bei Verwendung einer Rundempfangsantenne mit einer einzigen Hilfsantenne zur Erzeugung eines einzigen Empfangsminimums entsteht ein trichterförmiges Empfangsminimum, nicht etwa ein punktförmiges Empfangsminimum. Dies bewirkt, daß bei genügend starker Unterdrückung des Störers der Empfang eines Satelliten nicht nur dann, wenn er exakt in Richtung des Störers steht, sondern auch in einem Raumwinkelbereich in der Umgebung des Störers wegen starker Dämpfung des Empfangssignals nicht ausreichend stark zu empfangen ist.

Der Erfindung liegt die Aufgabe zugrunde, eine Möglichkeit zu schaffen, bei der der Raumwinkelbereich mit starker Dämpfung des Empfangssignals in der Umgebung des Störers, allgemeiner der Bereich in der Umgebung der Raumrichtung, in der ein Empfangsminimum erzeugt werden soll, gegenüber der bekannten Antennenanlage verkleinert ist. Diese Aufgabe wird durch die Merkmale des Anspruchs 1 und durch die Merkmale des unabhängigen Anspruchs 7 gelöst.

Erfindungsgemäß kann die Anordnung so getroffen sein, daß die erstgenannte Hilfsantenne im Zusammenwirken mit der Hauptantenne im Betrieb nur ein einziges Empfangsminimum erzeugt oder mehrere Empfangsminima erzeugt. Auch die weitere Hilfsantenne kann im Zusammenwirken mit der Hauptantenne nur ein einziges Empfangsminimum oder mehrere Empfangsminima erzeugen. Bevorzugt ist, daß eine der Hilfsantennen (im Beispiel die erstgenannte Hilfsantenne), nur ein einziges Empfangsminimum erzeugt, und daß die andere Hilfsantenne eine Mehrzahl von Empfangsminima erzeugt. Die weiteren Erklärungen beziehen sich zunächst auf diese bevorzugte Ausführungsform. Andere Ausführungsformen werden am Schluß besprochen.

Erfindungsgemäß ist sowohl die Dämpfung, die von der erstgenannten Hilfsantenne allein erzielt wird (gegebenenfalls durch Zusammenwirken mit der Rundempfangsantenne) als auch die Dämpfung, die von der weiteren Hilfsantenne allein erzielt wird (gegebenenfalls wiederum im Zusammenwirken mit der Rundempfangsantenne) so bemessen, daß auch im Bereich des Empfangsminimums der erstgenannten Hilfsantenne oder aller Empfangsminima der weiteren Hilfsantenne der Empfang der jeweils gewünschten Nutzsignale, z.B. von Satelliten, insbesondere Ortungssatelliten, noch zuverlässig möglich ist. Nur in einer einzigen Raumrichtung, nämlich in derjenigen Raumrichtung, in der die erstgenannte Hilfsantenne ein Empfangsminimum erzeugt, überlagert sich deren Empfangsminimum mit einem der Empfangsminima der weiteren Hilfsantenne, und dort wird dann in einem stark reduzierten Winkelbereich eine derart starke Dämpfung erzielt, daß praktisch nur ein punktförmiger Störer vom Empfang durch die Antennenanlage ausgeschlossen wird. Im Zusammenhang mit umlaufenden Satelliten bedeutet dies, daß die Signale eines Satelliten lediglich in demjenigen sehr kurzen Zeitbereich, in dem er sich möglicherweise genau hinter dem Störer befindet, nicht empfangen werden können.

Ein Vorteil der Erfindung liegt darin, daß die Verfügbarkeit von Satellitensignalen gegenüber dem Stand der Technik vergrößert ist, so daß die Erfindung insbesondere auch für sicherheitsrelevante Anlagen, beispielsweise für die ständige Versorgung von sich einem Flughafen nähernden Flugzeugen mit genauen Positionssignalen geeignet ist.

Die erstgenannte Hilfsantenne und/oder die weitere Hilfsantenne kann ebenfalls eine Rundempfangsantenne, insbesondere mit hemisphärischem Empfangsbereich, sein. Der Vorteil liegt dabei darin, daß allein durch elektrische Maßnahmen (Veränderung von Verstärkung bzw. Dämpfung, Einstellen einer geeigneten Phasenverschiebung zwischen den Signalen der Hilfsantennen und der Rundempfangsantenne) die Richtung des kombinierten Empfangsminimums in einem weiten Raumwinkelbereich eingestellt werden kann. Es mag aber in bestimmten Anwendungsfällen auch möglich sein, als Hilfsantennen solche zu verwenden, die bereits über eine gewisse Richtwirkung verfügen, besonders dann, wenn der Störer unbeweglich ist, so daß eine mechanische Nachführung der Antenne nicht benötigt wird. Solche Antennen sind allerdings für die Dämpfung von Störsignalen aus anderen Richtungen möglicherweise weniger geeignet. Da ein Störer sich im allgemeinen dicht am Horizont befindet, sind als Hilfsantennen solche Rundempfangsantennen brauchbar, die in der Richtung senkrecht nach oben ein Empfangsminimum haben.

Wenn mehrere Störer gleichzeitig ausgeblendet werden müssen, so sind im einfachsten Fall für jeden zusätzlichen Störer eine zusätzliche Hilfsantenne der erstgenannten Art und eine zusätzliche weitere Hilfsantenne erforderlich.

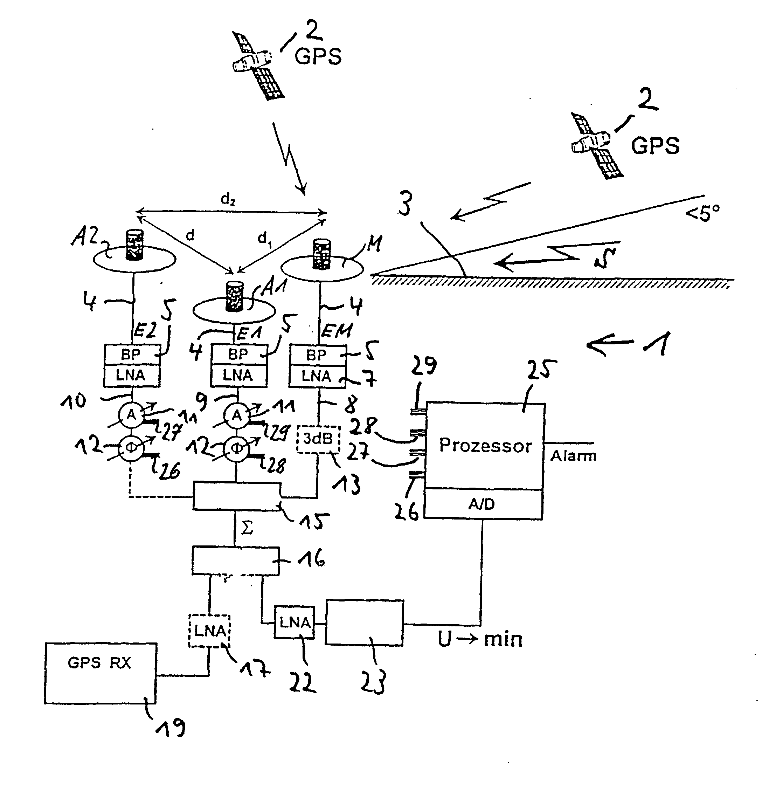

Weitere Merkmale und Vorteile der Erfindung ergeben sich aus der folgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.

Die einzige Figur zeigt teils als perspektivische Darstellung, teils als Schaltbild, eine Bodenstation eines satellitengestützten Navigationssystems GNSS (Global Navigation Satellite System = globales Satelliten-Navigationssystem). Anhand dieser Figur werden die erfindungsgemäße Antennenanlage und das erfindungsgemäße Verfahren beschrieben.

Eine Bodenstation 1 ist im Beispiel zum praktisch gleichzeitigen Empfang einer Mehrzahl von GPS-Satelliten 2 ausgebildet, die in bekannter Weise Uhrzeitsignale ausstrahlen, wobei am Ort der Empfangsstation aus.der Uhrzeit beim Eintreffen der Signale und der den Satellitensignalen aufgeprägten Uhrzeit die Laufzeit der Signale und somit die Entfernung des jeweiligen Satelliten vom Ort der Bodenstation ermittelt werden kann.

Bekanntlich ergeben sich durch Einflüsse der Ionosphäre und/oder der Troposphäre Laufzeitverzerrungen, so daß die auf die soeben geschilderte Weise beschriebenen Entfernungswerte fehlerhaft sind. Zur Korrektur werden mittels des ebenfalls bekannten Differential-GPS (DGPS) in der Bodenstation, deren Lage hinsichtlich geographischer Länge, Breite und Höhe exakt vermessen ist, durch Vergleich mit der jeweils anhand der bekannten Satellitenbahnen bekannten tatsächlichen Satellitenentfernungen Fehlerkorrektursignale erzeugt. Diese werden ausgesendet und von Benutzern ausgewertet. Die Fehlerkorrektursignale gestatten es, die durch den Ionosphäreneinfluß und auch durch andere Einflüsse hervorgerufenen Fehler, die ohne Korrektur bei mehreren hundert Metern liegen können, auf ganz geringe Werte zu reduzieren.

In der Zeichnung ist angedeutet, daß in einem Elevationsbereich von weniger als 5 Grad oberhalb der mit dem Bezugszeichen 3 bezeichneten Horizontalebene Störsignale S zu erwarten sind, die dann, wenn keine besonderen Maßnahmen getroffen werden, den Empfang von Satellitensignalen durch die Bodenstation auch aus Raumwinkelbereichen, die von der tatsächlichen Störung weit entfernt sind, erheblich beeinträchtigen können.

Die Bodenstation 1 weist eine Hauptantenne M, eine erste Hilfsantenne A1 und eine zweite Hilfsantenne A2 auf. Alle Antennen sind solche mit einer nahezu hemisphärischen Empfangscharakteristik, d.h. sie nehmen Signale aus praktisch allen Richtungen der oberhalb des Erdbodens liegenden Hemisphäre auf. Dadurch sind sie in der Lage, auch die Signale von sehr dicht am Horizont stehenden Satelliten zu empfangen.

Die erste Hilfsantenne A1 hat von der Hauptantenne M einen Abstand d1, der kleiner ist als eine Wellenlänge der von den Satelliten abgestrahlten Hochfrequenz. Zweckmäßig beträgt dieser Abstand zum Beispiel etwa 0,5 bis 0,6 Wellenlängen. Im Beispiel ist d1 eine halbe Wellenlänge. Durch diesen relativ kleinen Abstand wird ein einziges Empfangsminimum erzeugt. Die zweite Hilfsantenne A2 hat von der Hauptantenne M einen Abstand d2, der viel größer ist als dl. d2 beträgt zum Beispiel 1 bis 2 Wellenlängen. Bei einem Abstand d2 von mehr als 1 Wellenlänge werden mehrere Empfangsminima erzeugt. Im Beispiel beträgt d2 etwa 1,5 Wellenlängen. Der Abstand zwischen den beiden Hilfsantennen ist d und ist im Beispiel so groß wie d1, kann aber auch andere Werte haben.

Die Ausgangsleitungen jeder der Antennen führen Signale EM (bei der Hauptantenne M), E1 (bei der Hilfsantenne A1) und E2 (bei der Hilfsantenne A2). Die Ausgangsleitungen der drei Antennen sind jeweils über einen Bandpaß (BP) 5, durch den außerhalb des interessierenden Frequenzbereichs liegende Signale unterdrückt werden, einem rauscharmen Verstärker (LNA) 7 zugeführt. Die Ausgangsleitungen der rauscharmen Verstärker 7 sind mit den Bezugszeichen 8 bis 10 bezeichnet. In die Ausgangsleitungen 9 und 10 der beiden Hilfsantennen A1 bzw. A2 ist jeweils ein digital ansteuerbares, die Amplitude veränderndes (nämlich vergrößerndes oder verkleinerndes) elektronisches Verstärkungs-/Dämpfungsglied 11 und ein die Phase veränderndes digital ansteuerbares Phasenglied 12 geschaltet. In die Ausgangsleitung 8 der Hauptantenne M kann bei Bedarf ein Dämpfungsglied 13 eingeschaltet sein. Die in Amplitude und Phase und die gegebenenfalls durch das Dämpfungsglied 13 veränderten Signale auf den Leitungen 8 bis 10 werden einem Summierglied 15 zugeführt. Ein Teiler 16 führt einen Teil des kombinierten Signals, gegebenenfalls über einen rauscharmen Verstärker 17, einem GPS-Empfänger 19 und weiteren elektronischen Einrichtungen der Bodenstation 1 zur Erzeugung der oben genannten Korrektursignale zu.

Infolge der oben genannten gegenseitigen Abstände der Antennen ist die erste Hilfsantenne A1 gemeinsam mit der Hauptantenne M in der Lage, durch Änderung der Amplitude und Phase an der Ausgangsleitung 9 der ersten Hilfsantenne ein einziges Empfangsminimum in einer beliebigen Richtung des Raums zu erzeugen. Die zweite Hilfsantenne A2 kann wegen ihres größeren Abstands von der Hauptantenne M zusammen mit dieser eine Mehrzahl von Empfangsminima erzeugen, derart, daß eines von diesen in eine gewünschte Richtung des Raums, wo sich ein Störer befindet, zeigt.

Ein anderer Teil des kombinierten Signals wird von dem Teiler 16 ebenfalls über einen rauscharmen Verstärker 22 und eine Detektiereinheit 23 einem Prozessor 25 zugeführt, der durch ein Programm so gesteuert ist, daß er über Steuerleitungen 26, 27, 28 und 29 die steuerbaren Verstärkungs-/Dämpfungsglieder 11 und Phasenglieder 12 der beiden Hilfsantennen so verstellt, daß am Ausgang der Detektiereinheit 23 ein Signalminimum erscheint. Dabei wird das Ausgangssignal der Hilfsantennen A1 und A2 HF-mäßig nach Amplitude und Phase systematisch über die digital ansteuerbaren elektronischen Dämpfungsglieder und Phasenschieber derart bewichtet, daß das im Summensignal nach dem Summierglied 15 enthaltene Störsignal hinreichend reduziert ist. Dies geschieht dadurch, daß das der Detektiereinheit 23 zugeführte Teilsignal mittels der von dem Prozessor 25 gesteuerten Regelschleife minimiert wird. Dabei wird aber dafür gesorgt, daß weder durch die erste Hilfsantenne allein noch durch die zweite Hilfsantenne allein, jeweils zusammen mit der Hauptantenne, eine zur Störerunterdrückung ausreichende Dämpfung erzielt wird, weil dabei ein zu breites Empfangsminimum erzeugt würde, wie oben erklärt wurde.

Ein Minimum im Gesamtsignal der drei Antennen bedeutet, daß das Signal eines Störers, das zur Erhöhung des Gesamtsignals beiträgt, weitestgehend eliminiert worden ist.

Das einzige Empfangsminimum der ersten Hilfsantenne A1 zeigt dann, wenn am Ausgang der Detektiereinheit ein Minimum festgestellt wird, exakt in die Richtung des Störers (es wird angenommen, daß es nur ein einziger Störer ist). Eines der Empfangsminima der zweiten Hilfsantenne A2 zeigt bei einem erreichten Minimum in dem der Detektiereinheit 23 zugeführten Signal ebenfalls auf den Störer. Aus allen anderen Raumbereichen können Satellitensignale teilweise völlig ungedämpft oder im Bereich der anderen (nicht auf den Störer zeigenden) Minima der zweiten Hilfsantenne etwas gedämpft empfangen werden, wobei diese Dämpfung an keiner Stelle so groß ist, daß der Empfang des jeweiligen Satelliten behindert wird.

Die Minima der weiteren Hilfsantenne sind deswegen, weil der Abstand d2 größer als eine Wellenlänge ist, im Vergleich zu dem einzigen Minimum der erstgenannten Hilfsantenne schmaler und spitzer.

Bei dem automatischen Ausblenden des Störers wird mittels des Prozessors 25 ein adaptiver Algorithmus ausgeführt, der, auch ohne daß die Position des Störers vorher bekannt ist, die exakte Einstellung der Antennen so bewirkt, daß der Einfluß des Störers maximal reduziert wird.

Man kann zweckmäßig die Anordnung so treffen, daß bei Abwesenheit irgendwelcher Störsignale die Ausgangssignale an den Leitungen 26 bis 29 des Prozessors 25 so eingestellt sind, daß die Ausgangssignale der Hilfsantenne A1 und A2 maximal gedämpft werden, so daß nur das Ausgangssignal der Hauptantenne M ausgewertet wird. Im Falle einer Störung werden dann davon abweichende Werte von dem Prozessor eingestellt, so daß der Wert z.B an der Leitung 27 (Steuersignal für die Einstellung der Dämpfung des Ausgangssignals der ersten Hilfsantenne) als ein Alarm- und Störkriterium ausgenutzt werden kann.

Von der Regelschleife müssen nur wenige Parameter elektronisch verändert werden, so daß dieses zeitlich sehr schnell geschehen kann. Ist die Auflösung der Amplituden und Phasen hoch genug (4 bis 6 bit), kann leicht eine Reduzierung des Störsignals um 20 dB bis 30 dB erreicht werden.

Die Dämpfung nur durch die erste Hilfsantenne beträgt beispielsweise maximal 10 dB. Die Kombination der beiden auf den Störer gerichteten Minima führt zu einem sehr tiefen und schmalen Minimum. Dagegen entstehen in den anderen Minimumwinkelbereichen tolerable (d.h. den Satellitenempfang nicht verhindernde) schmale Minima.

Im Beispiel wurde die Bodenstation eines GPS-Systems beschrieben. Die obigen Ausführungen sind jedoch auch auf andere Systeme, die Satelliten verwenden, anwendbar.

Die erfindungsgemäße Bodenstation und das erfindungsgemäße Verfahren zum Betreiben der Bodenstation für satellitengestützte Navigations- oder Landesysteme wird durch die vorgeschlagenen Maßnahmen deutlich verbessert. Es kann unmittelbar im Störungsfall ein Alarmkriterium abgeleitet werden. Im Störungsfall kann durch Auswerten der Ansteuersignale für das Dämpfungsglied und Phasenglied der ersten Hilfsantenne die Richtung des Störers abgeleitet werden.

Bei einer vom beschriebenen Beispiel abweichenden anderen Ausführungsform erzeugt sowohl die erstgenannte Hilfsantenne als auch die weitere Hilfsantenne jeweils nur ein einziges Empfangsminimum, die zum Unterdrücken je eines Störers auf diesen eingestellt werden. Insbesondere können dabei die Hilfsantennen etwa gleich weit von der Rundempfangsantenne (Hauptantenne) entfernt angeordnet sein. Hier ist das insgesamt wirksame Empfangsminimum nicht ganz so schmal und spitz wie bei dem oben beschriebenen Beispiel.

Wieder bei einer anderen Ausführungsform erzeugt jede der Hilfsantennen für sich eine Mehrzahl von Empfangsminima. Von jeder Hilfsantenne wird ein einziges Minimum auf den Störer ausgerichtet. Das insgesamt wirksame Minimum kann hier in vorteilhafter Weise extrem schmal und spitz sein. Allerdings bedarf es beim Einrichten und/oder Betreiben der Anlage besonderer Sorgfalt, um zu verhindern, daß sich in Raumrichtungen, in denen ein Störer nicht vorhanden ist, Minima der beiden Hilfsantennen überlagern und dadurch den Empfang von Satellitensignalen verhindern.

Die Erfindung betrifft eine Antennenanlage mit einer Rundempfangsantenne M und mit einer Hilfsantenne A1, deren Empfangssignale bezüglich Amplitude und Phase derart kombinierbar sind, daß in einer gewünschten Richtung des Raums ein Empfangsminimum besteht. Es ist eine weitere Hilfsantenne A2 derart angeordnet und koppelbar, daß mindestens ein Empfangsminimum entsteht, wobei genau ein Empfangsminimum in die genannte gewünschte Richtung des Raums zeigt und mit dem von der erstgenannten Hilfsantenne erzeugten genannten Empfangsminimum bezüglich seiner Richtung übereinstimmt, und wobei die Dämpfungen an dem von der erstgenannten Hilfsantenne erzeugten Empfangsminimum und an dem mindestens einen von der weiteren Hilfsantenne erzeugten Empfangsminimum so bemessen sind, daß sie je für sich allein den Empfang eines mit einem vorbestimmten Mindestpegel sendenden Senders nicht behindern, und daß die in ihrer Richtung übereinstimmenden Empfangsminima gemeinsam eine größere Dämpfung bewirken, derart, daß sie zum Unterdrücken von Störern geeignet sind. Es entsteht ein sehr schmales Empfangsminimum. In den anderen Bereichen sind Satellitensignale empfangbar.

## Patentansprüche

1. Antennenanlage mit einer Rundempfangsantenne (Hauptantenne M) und mit einer (ersten) Hilfsantenne (A1), deren Empfangssignale bezüglich Amplitude und Phase derart kombinierbar sind, daß in einer gewünschten Richtung des Raums ein Empfangsminimum besteht, und mit einer weiteren Hilfsantenne (A2) derart angeordnet und koppelbar, daß mindestens ein Empfangsminimum entsteht, **dadurch gekennzeichnet, daß** genau ein Empfangsminimum in die genannte gewünschte Richtung des Raums zeigt und mit dem von der erstgenannten Hilfsantenne (A1) zusammen mit der Hauptantenne (M) erzeugten genannten Empfangsminimum bezüglich seiner Richtung übereinstimmt, und wobei die Dämpfungen an dem von der erstgenannten Hilfsantenne erzeugten Empfangsminimum und an dem mindestens einen von der weiteren Hilfsantenne erzeugten Empfangsminimum so bemessen sind, daß sie je für sich allein den Empfang eines mit einem vorbestimmten Mindestpegel sendenden Senders nicht behindern, und daß die in ihrer Richtung übereinstimmenden Empfangsminima gemeinsam eine größere Dämpfung bewirken, derart, daß sie zum Unterdrücken von Störern geeignet sind.

2. Antennenanlage nach Anspruch 1, **dadurch gekennzeichnet, daß** die erstgenannte Hilfsantenne (A1) zusammen mit der Hauptantenne (M) genau ein Empfangsminimum erzeugt, und daß die weitere Hilfsantenne (A2) zusammen mit der Hauptantenne (M) eine Mehrzahl von Empfangsminima in unterschiedlichen Richtungen erzeugt.

3. Antennenanlage nach Anspruch 1 oder 2, **dadurch gekennzeichnet, daß** die weitere Hilfsantenne (A2) von der Rundempfangsantenne (M) weiter entfernt ist als die erstgenannte Hilfsantenne (A1).

4. Antennenanlage nach einem der vorhergehenden Ansprüche, **dadurch gekennzeichnet, daß** zum Unterdrücken von mehreren Störern mehrere erste und mehrere weitere Hilfsantennen vorgesehen sind.

5. Antennenanlage nach einem der vorhergehenden Ansprüche, **dadurch gekennzeichnet, daß** mindestens eine der genannten Hilfsantennen eine Rundempfangscharakteristik hat.

6. Antennenanlage nach einem der vorhergehenden Ansprüche, **dadurch gekennzeichnet, daß** eine Regelungsanordnung zum automatischen Unterdrücken eines Störers vorgesehen ist.

7. Antennenanlage nach einem der vorhergehenden Ansprüche, **dadurch gekennzeichnet, daß** der Abstand (d1) der erstgenannten Hilfsantenne (A1) von der Hauptantenne (M) kleiner ist als eine Wellenlänge.

8. Antennenanlage nach einem der vorhergehenden Ansprüche, **dadurch gekennzeichnet, daß** der Abstand (d2) der zweiten Hilfsantenne (A2) von der Hauptantenne (M) mindestens eine Wellenlänge beträgt.

9. Verfahren zum Betreiben einer Antennenanlage mit einer Rundempfangsantenne (Hauptantenne M) und mit einer Hilfsantenne (A1), deren Empfangssignale bezüglich Amplitude und Phase derart kombinierbar sind, daß in einer gewünschten Richtung des Raums ein Empfangsminimum besteht, und mit einer weiteren Hilfsantenne (A2), die derart angeordnet und koppelbar ist, daß eine Mehrzahl von Empfangsminima entsteht, **dadurch gekennzeichnet, daß** die Amplituden und Phasen der Empfangssignale der Hilfsantennen (A1, A2) derart eingestellt werden, daß ein von der weiteren Hilfsantenne (A2) erzeugtes Empfangsminimum in die genannte gewünschte Richtung des Raums zeigt und mit dem von der erstgenannten Hilfsantenne (A1) erzeugten genannten Empfangsminimum bezüglich seiner Richtung übereinstimmt, und wobei die Dämpfungen an dem von der erstgenannten Hilfsantenne (A1) erzeugten Empfangsminimum und an den von der weiteren Hilfsantenne (A2) erzeugten Empfangsminima so bemessen werden, daß sie je für sich allein den Empfang eines mit einem vorbestimmten Mindestpegel sendenden Senders nicht behindern, und daß die in ihrer Richtung übereinstimmenden Empfangsminima gemeinsam eine größere Dämpfung bewirken, derart, daß sie zum Unterdrücken von Störern geeignet sind.

## Claims

1. Antenna system comprising an omnidirectional receiving antenna (main antenna M) and a (first) auxiliary antenna (A1), the received signals of which can be combined with respect to amplitude and phase in such a manner that a received minimum exists in a desired direction of the space, and is arranged with and can be coupled to a further auxiliary antenna (A2) in such a manner that at least one received minimum is produced, **characterized in that** exactly one received minimum points in the desired direction of the space and, with respect to its direction, corresponds to the received minimum generated by the first-mentioned auxiliary antenna (A1) together with the main antenna (M), and wherein the attenuations at the received minimum generated by the first-mentioned auxiliary antenna and at the at least one received minimum generated by the further auxiliary antenna are dimensioned in such a manner that they do not by themselves in each case impede the reception of a transmitter transmitting with a predetermined minimum level, and **in that** the received minima, which correspond in their direction, jointly effect a greater attenuation in such a manner that they are suitable for suppressing interferers.

2. Antenna system according to Claim 1, **characterized in that** the first-mentioned auxiliary antenna (A1) together with the main antenna (M) generates exactly one received minimum, and **in that** the further auxiliary antenna (A2) together with the main antenna (M) generates a plurality of received minima in different directions.

3. Antenna system according to Claim 1 or 2, **characterized in that** the further auxiliary antenna (A2) is farther distant from the omnidirectional receiving antenna (M) than the first-mentioned auxiliary antenna (A1).

4. Antenna system according to one of the preceding claims, **characterized in that** a number of first and a number of further auxiliary antennas are provided for suppressing a number of interferers.

5. Antenna system according to one of the preceding claims, **characterized in that** at least one of the auxiliary antennas has an omnidirectional receiving pattern.

6. Antenna system according to one of the preceding claims, **characterized in that** a regulating arrangement is provided for automatically suppressing an interferer.

7. Antenna system according to one of the preceding claims, **characterized in that** the distance (d1) of the first-mentioned auxiliary antenna (A1) from the main antenna (M) is less than one wavelength.

8. Antenna system according to one of the preceding claims, **characterized in that** the distance (d2) of the second auxiliary antenna (A2) from the main antenna (M) is at least one wavelength.

9. Method for operating an antenna system comprising an omnidirectional receiving antenna (main antenna M) and an auxiliary antenna (A1), the received signals of which can be combined with respect to amplitude and phase in such a manner that a received minimum exists in a desired direction of the space, and with a further auxiliary antenna (A2) which is arranged and can be coupled in such a manner that a plurality of received minima is produced, **characterized in that** the amplitudes and phases of the received signals of the auxiliary antennas (Al, A2) are adjusted in such a manner that a received minimum generated by the further auxiliary antenna (A2) points in the desired direction of the space and, with respect to its direction, corresponds to the received minimum generated by the first-mentioned auxiliary antenna (A1), and wherein the attenuations at the received minimum generated by the first-mentioned auxiliary antenna (A1) and at the received minima generated by the further auxiliary antenna (A2) are dimensioned in such a manner that they do not by themselves in each case impede the reception of a transmitter transmitting with a predetermined minimum level, and **in that** the received minima, which correspond in their direction, jointly effect a greater attenuation in such a manner that they are suitable for suppressing interferers.

## Revendications

1. Dispositif d'antennes doté d'une antenne réceptrice omnidirectionnelle (antenne principale M) et d'une (première) antenne auxiliaire (A1), dont les signaux de réception, en termes d'amplitude et de phase, peuvent être combinés de manière à générer un minimum de réception dans une direction souhaitée de l'espace, et d'une seconde antenne auxiliaire (A2) disposée et pouvant être couplée de manière à générer au moins un minimum de réception, sachant qu'exactement un minimum de réception montre dans la direction souhaitée de l'espace et coïncide, en ce qui concerne sa direction, avec le minimum de réception généré par la première antenne auxiliaire (A1) et l'antenne principale (M) et sachant que les affaiblissements du minimum de réception généré par la première antenne auxiliaire et du minimum de réception généré au moins par la seconde antenne auxiliaire sont telles à ne pas gêner chacune à elle seule la réception d'un émetteur émettant à un niveau minimum prédéfini et à faire en sorte que les minima de réception dont la direction coïncide provoquent, ensemble, un affaiblissement plus important de manière qu'ils soient propres à éliminer des perturbateurs.

2. Dispositif d'antennes selon la revendication 1, **caractérisé en ce que** la première antenne auxiliaire (A1) génère, ensemble avec l'antenne principale (M) exactement, un minimum de réception et que la seconde antenne auxiliaire (A2) génère, ensemble avec l'antenne principale (M), plusieurs minima de réception dans différentes directions.

3. Dispositif d'antennes selon la revendication 1 ou 2, **caractérisé en ce que** la seconde antenne auxiliaire (A2) est plus éloignée de l'antenne réceptrice omnidirectionnelle (M) que la première antenne auxiliaire (A1).

4. Dispositif d'antennes selon l'une des revendications précédentes **caractérisé en ce que** plusieurs premières et secondes antennes auxiliaires sont prévues pour l'élimination de plusieurs perturbateurs.

5. Dispositif d'antennes selon l'une des revendications précédentes **caractérisé en ce que** l'une des antennes auxiliaires citées au moins présente des caractéristiques de réception omnidirectionnelles.

6. Dispositif d'antennes selon l'une des revendications précédentes **caractérisé en ce qu'**une structure de réglage pour l'élimination d'un perturbateur est prévue.

7. Dispositif d'antennes selon l'une des revendications précédentes **caractérisé en ce que** la distance (d1) de la première antenne auxiliaire (A1) par rapport à l'antenne principale (M) est plus petite qu'une longueur d'onde.

8. Dispositif d'antennes selon l'une des revendications précédentes **caractérisé en ce que** la distance (d2) de la seconde antenne auxiliaire (A2) par rapport à l'antenne principale (M) est égale à une longueur d'onde au moins.

9. Procédé pour faire fonctionner un dispositif d'antennes doté d'une antenne de réception omnidirectionnelle (antenne principale M) et d'une antenne auxiliaire (A1), dont les signaux de réception, en termes d'amplitude et de phase, peuvent être combinés de manière à générer un minimum de réception dans une direction souhaitée de l'espace, et d'une seconde antenne auxiliaire (A2) qui est disposée et qui peut être couplée de manière à créer plusieurs minima de réception, **caractérisé en ce que** les amplitudes et les phases des signaux de réception des antennes auxiliaire (A1, A2) sont réglés de telle manière que le minimum de réception généré par la seconde antenne auxiliaire (A2) montre dans la direction souhaitée de l'espace et coïncide, en ce qui concerne sa direction, avec le minimum de réception généré par la première antenne auxiliaire (A1), et sachant que les affaiblissements du minimum de réception généré par la première antenne auxiliaire (A1) et des minima de réception générés par la secondé antenne auxiliaire (A2) sont telles à ne pas gêner, chacune à elle seule, la réception d'un émetteur émettant à un niveau minium prédéfini et à faire en sorte que les minima de réception dont la direction coïncide provoquent, ensemble, un affaiblissement plus important de manière qu'ils soient propres à éliminer les perturbateurs.
